# EUROPEAN PATENT APPLICATION

(11) **EP 1 826 840 A2**
(43) Date of publication of application: **29.08.2007**
(21) Application number: 07102878.1
(22) Date of filing: 22.02.2007
(51) Int. Cl.: H01M 2/04, H01M 10/02

(54) **Secondary battery and method of manufacture**

(30) Priority: 27.02.2006 KR 20060018707
(71) Applicant: Samsung SDI Co., Ltd., Suwon-si, Gyeonggi-do (KR)
(72) Inventor: CHO, Jeong Kwon c/o Legal & IP Team Samsung SDI Co. Ltd, Gyeonggi-do (KR)
(74) Representative: Walaski, Jan Filip

(57) **Abstract**

A secondary battery which reduces production cost and improves productivity by excluding the process of attaching an insulating washer and, instead, insulating a cap plate by forming an UV-curing insulation layer on an external surface of the cap plate after sealing the electrolyte inlet.

## Description

The present invention relates to a secondary battery, and more particularly, to a secondary battery and fabricating process thereof to reduce production cost and improve manufacturing productivity by excluding the process of attaching a washer, the exclusion effected by insulating a cap plate with an insulation coating on the surface of the cap plate.

Generally, a secondary battery is different from other batteries as the secondary battery is discharged through a reversible process and is therefore rechargeable. Secondary batteries are used widely in devices such as cell phones, notebook computers, camcorders, etc. Operating or nominal voltage of lithium secondary batteries is about 3.6V and the lithium secondary battery is 3 times more powerful than nickel, cadmium, or nickel-hydrogen batteries. Additionally, the energy density per unit weight of the lithium secondary battery is greater than other secondary cells.

In the lithium secondary battery, lithium oxide is generally used as the positive electrode, and carbon is generally used as the negative electrode. Depending upon the sort of electrolyte used, the lithium secondary battery is classified as either a liquid electrolyte battery or high molecular weight electrolyte (polymer electrolyte) battery. Liquid electrolyte batteries are described as lithium-ion batteries; and polymer electrolyte batteries are termed lithium-ion polymer batteries. Also, lithium-ion batteries are produced in many shapes, typical of which are cylinders, polygonal prisms, and pouch types. The shape of lithium-ion polymer batteries may be custom made as the internal electrodes and separator are laminated together and do not require external pressure, supplied by the case, to force such internal components together.

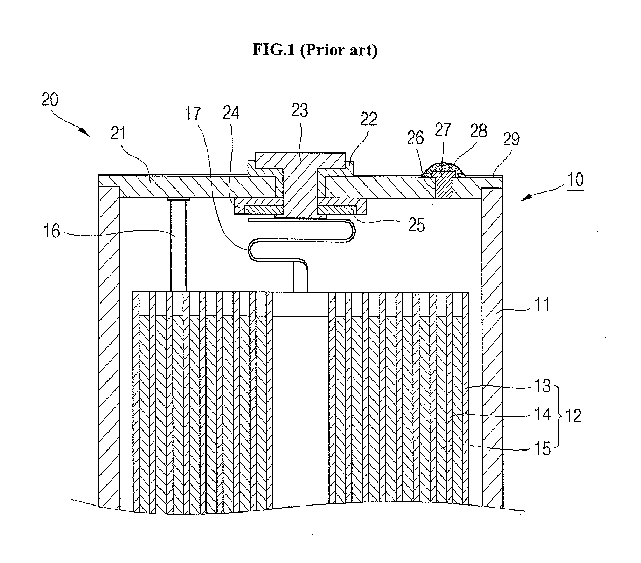

FIG.1 illustrates a conventional polygonal shape of a secondary battery according to the related art. As in FIG. 1, the secondary battery 10 includes a can 11, an electrode assembly 12 disposed in the can 11, and a can assembly 20 connected to the can 11.

The electrode assembly 12, including a positive electrode plate 13, a separator 14, and a negative electrode plate 15, is wound in series to form a jelly-roll-like shape. And the positive electrode plate 13 and the negative electrode plate 15 are connected to the positive electrode tab 16 and the negative electrode tab 17, respectively. The positive electrode tab 16 and the negative electrode tab 17 are extended outwardly from the electrode assembly 12 to the cap plate 21 and the negative terminal 23, respectively.

The cap assembly 20 includes a cap plate 21, connected to the upper end of the can 11, a negative terminal 23, a gasket 22 to insulate the negative terminal 23 from the cap plate 21, an insulation plate 24 installed on the lower surface of the cap plate 21, and a terminal plate 25, which is installed on the surface of the insulation plate 24. The negative terminal 23 extends through the cap plate 21, insulated therefrom by the gasket 22 and the insulation plate 24, to connect to the terminal plate 25, which is insulated from the cap plate 21 by the insulation plate 24.

The positive electrode tab 16 is electrically connected to the cap plate 21, and the negative electrode tab 17 is electrically connected to the negative terminal 23. The negative electrode tab 17 may be directly connected to the negative terminal 23 (as shown) or connected via the terminal plate 25.

In addition, the cap plate 21 contains an electrolyte inlet 26 which provides a channel for infusing an electrolyte into the can 11. The sealing element 27 is inserted into the electrolyte inlet 26 so as to seal the cap assembly 20 and prevent electrolyte from escaping the secondary battery 10. Also, there is a UV-cured coating layer 28 on the upper surface of the sealing element 27.

The conventional secondary battery 10 includes an insulating paper washer 29 on the external surface of the cap plate 21. The insulating paper washer 29 prevents short circuits that often occur when the positively-charged cap plate 21 contacts a recharge/discharge terminal and the negative terminal 23 does not contact the recharge/discharge terminal during chemical processing of the secondary battery 10.

Or, in the conventional secondary battery 10, when there is a battery protection circuit on the side of the bare cell, the insulating paper washer 29 prevents short circuits even though the lead wire of the battery protection circuit contacts with the cap plate 21.

However, despite the protective nature of the insulating paper washer 29, the attachment of the insulating paper washer 29 increases the cost of production and decreases the manufacturing rate of secondary batteries.

In view of the above-mentioned and other limitations, aspects of the present invention provide a method of fabricating a secondary battery to attain insulation of the cap plate.

A secondary battery according to aspects of the present invention includes an electrode assembly including a positive electrode plate, a separator, and a negative electrode plate wound in series; a can including the electrode assembly; a cap plate connected to an upper opening portion of the can and including a terminal opening portion and an electrolyte infusion inlet, an electrode terminal connected to the terminal opening portion, a gasket disposed between the electrode terminal and the cap plate, and insulating the electrode terminal, and a plug to plug an electrolyte opening of the cap plate and to seal the electrolyte opening hole, wherein the insulation layer is on an upper plane of the cap plate. The insulation layer is UV-cured coating layer and the curing paint of the UV-cured coating layer is a photo-curing resin.

Also, a method of fabricating a secondary battery is provided, the method including placing an electrode assembly in a can; forming a cap assembly on an upper opening of the can; injecting an electrolyte in an electrolyte opening hole of a cap plate of the cap assembly; sealing the electrolyte opening hole with a plug; and forming an insulation layer on an upper plane of the cap plate after sealing the electrolyte opening hole.

According to further aspects of the current invention, a secondary battery is provided including a cap assembly with an electrolyte inlet therethrough; a plug to fit into and seal the electrolyte inlet; and a UV-crosslinked insulation layer, wherein the UV-crosslinked insulation layer is formed on an external surface of the cap assembly and an external surface of the plug.

According to further aspects of the current invention, a secondary battery is provided including a cap assembly with an electrolyte inlet therethrough; and a UV-crosslinked insulation layer, wherein the UV-crosslinked insulation layer is formed on an external surface of the cap assembly.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings in which:
FIG. 1 is a cross-sectional view of the upper end of a secondary battery of the related art;
FIG. 2 is a cross-sectional view of the upper end of a secondary battery according to aspects of the present invention;
FIG. 3 is a process flow chart for manufacturing a secondary battery according to aspects of the present invention.

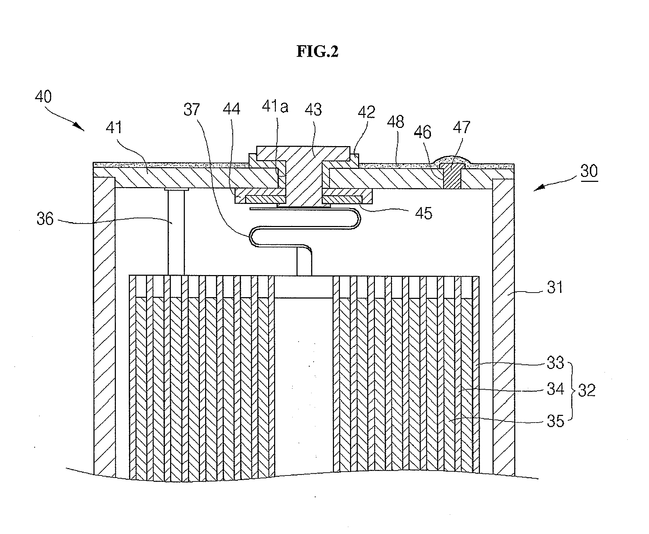

As illustrated in FIG. 2, the secondary battery 30 according to aspects of the present invention includes a can 31, an electrode assembly 32, contained within the can 31, and a cap assembly 40 to enclose the exposed inner surface of the can 31.

The can 31 is a polygonal prism or an extended cylindrical shape having one end sealed and one end exposing the internal surfaces of the can 31. The can 31 can be manufactured of metal as the can 31 may be one of the electrode terminals.

The electrode assembly 32 within the can 31 includes a positive electrode plate 33, a separator 34, and a negative electrode plate 35 which are stacked and wound into a cylindrical shape such that a separator 34 is disposed between the positive electrode plate 33 and the negative electrode plate 35. The wound positive electrode plate 33, separator 34, and negative electrode plate 35 form a jelly-roll type electrode assembly 32.

Generally in lithium secondary batteries, the positive electrode plate 33 includes a positive electrode collector constructed of sheet aluminum that is coated on both sides with a lithium oxide slurry. The negative electrode plate 35 generally includes a negative electrode collector constructed of sheet copper that is coated on both sides with a carbon-based slurry.

From the positive electrode plate 33, a portion of the positive electrode tab 36 is disposed to extend from the upper end of the electrode assembly 32 to the cap plate 41. The negative electrode tab 37 is disposed to extend from the negative electrode plate 35 at the upper end of the electrode assembly 32 to the negative terminal 43, as shown in FIG. 2. However, the negative electrode tab 37 may also extend to and contact the electrode plate 45. The positive electrode collector and negative electrode collector are stabilized by and welded to the positive electrode tab 36 and negative electrode tab 37, respectively. The positive electrode tab 36 and the negative electrode tab 37 can alternatively have the opposite polarity.

The cap assembly 40 is installed at the open upper end of the can 31, and the cap assembly 40 includes the cap plate 41, the insulation plate 44 installed on the lower surface of the cap plate 41, and the electrode plate 45 which contacts the lower surface of the insulation plate 44.

A terminal opening 41a is formed in the middle of the cap plate 41, and the negative terminal 43 is installed in the terminal opening 41a to extend therethrough to the inside of the can 31. A gasket 42 is installed about the outside surface of the negative terminal 43 and between the negative terminal 43 and the cap plate 41 at the terminal opening 41 a. The gasket 42 insulates the negative terminal 43 from the cap plate 41. The electrode plate 45 connects to the portion of the negative terminal 43 that is disposed inside the can 31. According to aspects of the invention, the electrode plate 45 may complete the electrical connection between the negative electrode plate 35, the negative electrode tab 37, and the negative terminal 43.

The positive electrode tab 36 is welded to the cap plate 41. The negative electrode tab 37 is welded to the negative terminal 43, as shown in FIG. 2. Again, the negative electrode tab 37 may be welded to the terminal plate 45, which is electrically connected and welded to the negative terminal 43. Alternatively, there may be a design of a secondary battery 30 with the opposite polarity to that described above, meaning that the negative electrode tab 37 is electrically connected to the cap plate 41, and the positive electrode tab 36 is connected to the terminal 43, which would then be a positive terminal.

Furthermore, the construction of the cap assembly 40 may include varying components not herein described.

The cap plate 41 includes the electrolyte inlet 46 allowing the injection of electrolyte into the can 31 when the cap plate 41 is installed, and the electrolyte inlet 46 can be sealed off with plug 47.

The plug 47 may be a ball or pin type and be constructed of aluminum, an aluminum alloy, or stainless steel.

While or after the electrolyte inlet 46 is pressed and sealed with the plug 47, the UV coating layer 48, an ultraviolet ray hardening layer, is formed on the upper surface of the cap plate 41.

The UV coating layer 48 is hardened and stabilized by the application of UV radiation. The UV coating layer 48 may be a UV sclerosing paint. The UV sclerosing paint may be applied by spraying the paint on the surface of the cap plate 41. The UV coating layer 48, in response to excitation by UV radiation, forms new bonds between the individual polymer chains within the UV coating layer 48. The UV coating 48 crosslinks to become a hardened polymer coating. The sclerosing or curing paint may be a photo-hardening resin, but it is not limited thereto. Although the UV coating layer 48 is described as hardening in response to excitation by UV radiation, the UV coating layer 48 may include a material that hardens in response to any form of electromagnetic radiation, including x-ray and visible light.

The characteristics of the UV coating layer 48 include the capacity to crosslink at lower temperatures, harden or cure quickly, protect from and resist pollution, and electrically insulate the cap plate 41. The UV coating 48 prevents short circuits on the upper surface of the cap plate 41 by protecting the cap plate 41 from any undesired electrical connections.

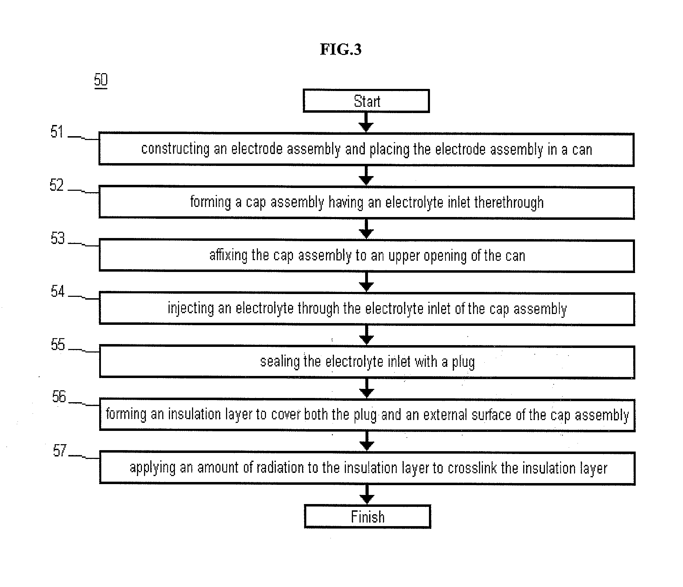

Referring to FIG. 3, the process 50 to manufacture the secondary battery according to an embodiment of the present invention will be explained.

First of all, the electrode assembly 32 is constructed and positioned on the inside of the can 31 (51); the cap assembly 40 is assembled (52) and attached to the upper opening of the can 31 (53); and the electrolyte liquid is injected through the electrolyte inlet 46 (54), which is formed in the cap plate 41 of the cap assembly 40. Thereafter, the electrolyte inlet 46 of the cap plate 41 is plugged and sealed with the plug 47 (55); the plug 47 is externally compressed from the upper side. Then, the periphery of the plug 47 is welded to the surface of the electrolyte inlet 46, thereby sealing the cap plate 41.

Next, the UV coating layer 48 is formed on the whole upper surface of the cap plate 41 and the plug 47 (56). In the related art, the UV coating layer is formed only on the upper side of the sealing element 27 (of FIG. 1). Here, the UV coating layer 48 is formed on the whole surface of the cap plate 41 and acts as an insulator thereby replacing the need for the insulating paper washer 29 (of FIG. 1). Therefore, the application of the insulating paper washer 29 can be eliminated from the battery manufacturing process in favor of the UV coating process.

Finally, an amount of UV radiation is applied to the UV coating layer 48 so that the UV coating layer hardens or crosslinks.

As described above, the exclusion of the washer attachment process reduces the production cost and increases the productivity of manufacturing the secondary battery.

Although a few embodiments of the present invention have been shown and described, it would be appreciated by those skilled in the art that changes may be made in these embodiments without departing from the principles of the invention, the scope of which is defined in the claims.

## Claims

1. A secondary battery, comprising:
an electrode assembly;
a can for containing the electrode assembly;
a cap plate connected to an upper portion of the can and including an electrolyte inlet;
a plug for sealing the electrolyte inlet of the cap plate; and
an insulation layer disposed on the external surface of the plug and extending over substantially the whole of the exposed upper surface of the cap plate.

2. The secondary battery of claim 1, wherein the cap plate further includes a terminal opening, the battery further comprising an electrode terminal extending through the terminal opening.

3. The secondary battery of claim 2, further comprising a gasket disposed between the electrode terminal and the cap plate to insulate the electrical terminal from the cap plate.

4. The secondary battery of claim 1, 2 or 3, wherein the insulation layer electrically insulates the exposed upper surface of the cap plate and the plug.

5. The secondary battery of any one of the preceding claims, wherein the insulation layer is formed of one insulating material.

6. The secondary battery as claimed in any one of the preceding claims, wherein the insulation layer includes a UV-cured coating layer, or a photo-curing resin.

7. The secondary battery of any one of the preceding claims, wherein the insulating material of the insulating layer forms cross-links in response to application of electromagnetic radiation.

8. The secondary battery of any one of the preceding claims, wherein the insulating material is a polymer or a sclerosing paint.

9. The secondary battery of any one of the preceding claims, wherein the insulating material is sprayable onto the cap plate and the plug.

10. A method of fabricating a secondary battery, the method comprising:
constructing an electrode assembly and placing the electrode assembly in a can;
forming a cap assembly having an electrolyte inlet;
affixing the cap assembly to an upper opening of the can;
injecting an electrolyte through the electrolyte inlet;
sealing the electrolyte inlet with a plug; and
forming an insulation layer to cover both the plug and substantially the whole of an exposed upper surface of the cap assembly.

11. The method of claim 10, wherein the insulation layer includes a UV-curable coating or a photo-hardening resin.

12. The method of claim 10 or 11, further comprising:
applying radiation to the insulation layer to crosslink the material of the insulation layer.

13. The method of any one of claims 10 to 12, comprising forming the insulation layer by spraying a material to cover both the plug and an external surface of the cap assembly.
